# EUROPÄISCHE PATENTANMELDUNG

(11) **EP 0 811 796 A1**
(43) Veröffentlichungstag der Anmeldung: **10.12.1997**
(21) Anmeldenummer: 97109180.6
(22) Anmeldetag: 06.06.1997
(51) Int. Cl.: F16L 11/16

(54) **Biegbarer Metallschlauch**

(30) Priorität: 06.06.1996 CH 1430/96
(71) Anmelder: Boa AG, CH-6023 Rothenburg (CH)
(72) Erfinder: Gautschi, Rudolf, 6005 Luzern (CH)
(74) Vertreter: Blum, Rudolf Emil Ernst

(57) **Zusammenfassung**

Zwischen den Koppelabschnitten (2, 3) des Profilstreifens (1) ist ein Draht (4) angeordnet. Dieser Draht (4) begrenzt das Ausmass der Biegung, d.h. den kleinsten Krümmungshalbmesser des Metallschlauches. Damit lässt sich ein zu starkes Biegen mit schädigenden Ueberbeanspruchungen eines im Metallschlauch angeordneten, ebenfalls biegbaren Rohres vermeiden.

## Beschreibung

Die Erfindung betrifft einen biegbaren Metallschlauch, der aus mindestens einem wendelförmig gewickelten Profilstreifen gebildet ist.

Solche Metallschläuche dienen grundsätzlich als Schutzschläuche, um einen in ihnen angeordneten Schlauch oder eine Leitung von äusseren, schädigenden Einwirkungen zu schützen. Es gibt Anwendungen, bei denen in einem solchen biegbaren Metallschlauch ein Wellschlauch mit parallel zueinander verlaufenden oder auch wendelförmig verlaufenden Wellen angeordnet ist. Bei solchen Wellschläuchen besteht die Gefahr, dass sie bei einem zu starken Biegen Schaden, beispielsweise Risse erleiden. Damit bilden sich in der Wand des Wellschlauches Lecks, aus welchen das im Wellschlauch strömende Medium in die Umgebung austreten kann. Ist dieses Medium z.B. Gas zum Versorgen von Haushaltgeräten, kann das Ausströmen zu katastrophalen Folgen führen.

Um ein zu starkes Biegen von Metallschläuchen allgemein und insbesondere von in Schutzschläuchen angeordneten Wellschläuchen zu vermeiden, sind verschiedene Vorkehrungen bekannt geworden. Diese sind jedoch verhältnismässig aufwendig und folglich teuer.

Hier will die Erfindung Abhilfe schaffen. Die Erfindung wie sie in den Ansprüchen gekennzeichnet ist, löst die Aufgabe, einen biegbaren Metallschlauch zu schaffen, der aus mindestens einem wendelförmig gewickelten Profilstreifen gebildet ist, der eine einfache Vorkehrung zur Begrenzung des Ausmasses des Krümmungsradius beim Biegen enthält.

Die durch die Erfindung erreichten Vorteile sind im wesentlichen darin zu sehen, dass die Profilstreifen, die ohnehin für einen gegenseitigen Formschluss verformt sein müssen, derart verformt sind, dass einerseits zwischen denselben ein Abstandhalter in Form eines einfachen Drahtes eingesetzt sein kann, und zweitens dass sie im Falle eines kleinsten Krummungsradius bereichsweise aneinander anliegen.

Im folgend wird die Erfindung anhand einer lediglich einen Ausführungsweg darstellenden Zeichnung näher erläutert.

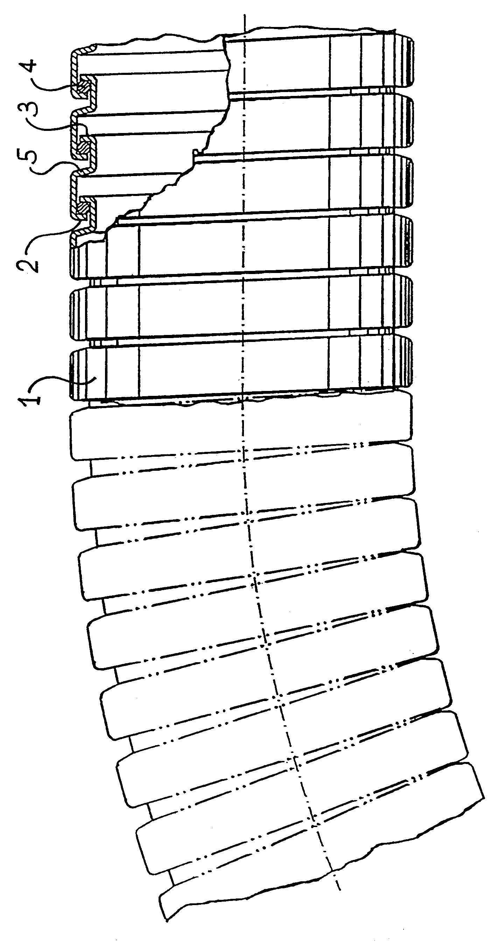

Die einzige Figur zeigt einen Metallschlauch, teils geschnitten und teils in einer Seitenansicht gezeichnet.

Der gezeigte Metallschlauch ist durch einen wendelförmig gewickelten Profilstreifen 1 aus Metall gebildet. Dieser Profilstreifen kann aus irgendwelchem bekannten, zweckdienlichen Material bestehen. Weiter muss der Metallschlauch nicht aus einem einzigen gewickelten Profilstreifen gebildet sein, er kann auch aus mehreren Profilstreifen aufgebaut sein.

Der Profilstreifen 1 weist eine grob S-förmige Querschnittsform auf. Er ist entlang beider Ränder abgebogen, um streifenförmige Koppelabschnitte 2, 3 zu bilden. Die Wendelabschnitte des Profilstreifens sind durch diese Koppelabschnitte 2,3 formschlüssig zusammengehalten. Es ist offensichtlich, dass die Querschnittsform des Profilstreifens 1 und der Koppelabschnitte 2, 3 von der gezeichneten Ausführung verschieden sein können.

Zwischen den zwei einander umgreifenden Koppelabschnitten 2, 3 ist ein wendelförmiger Draht 4 eingelegt. Der Mittelabschnitt des Profilstreifens 1 ist mit der Bezugsziffer 5 angedeutet.

Wird der Schlauch im geradlinig verlaufenden Zustand in axialer Richtung zusammengedrückt, lässt er sich so weit zusammendrücken, bis die jeweiligen Koppelabschnitte 2,3 an den jeweiligen Mittelabschnitten 5 anliegen.

Wird der Schlauch im geradlinig verlaufenden Zustand in axialer Richtung auseinandergezogen, lässt er sich so weit auseinanderziehen, bis die jeweiligen Koppelabschnitte 2, 3 am Draht 4 anliegen.

Wird der Schlauch gebogen, wir in der Zeichnung dargestellt ist, lässt er sich soweit biegen, bis die Koppelabschnitte 2, 3 bei der vom Krümmungsmittelpunkt der Biegung den grössten Abstand aufweisenden Stelle (d.h. basiert auf der Zeichnungsfigur "oben") am Draht 4 anliegen.

Bei der vom Krümmungsmittelpunkt der Biegung den kleinsten Abstand aufweisenden Stelle (d.h. in der Zeichnungsfigur "unten"), berühren die Koppelabschnitte 2, 3 den Mittelabschnitt 5. Es ist ersichtlich, dass im gekrümmten Zustand des Schlauches die Koppelabschnitte 2, 3 und der Mittelabschnitt grundsätzlich eine beliebige Stellung zueinander einnehmen können, so dass der kleinste Krümmungshalbmesser des Schlauches durch den eingelegten Draht 4 bestimmt ist.

Der Mittelabschnitt 5 verläuft schiefwinklig schräggestellt relativ zu den Koppelabschnitten 2,3 Dessen Schrägstellung ist vorteilhaft derart gewählt, dass wenn der Schlauch den durch den Draht 4 festgelegten kleinsten Krümungshalbmesser einnimmt, die Koppelabschnitte 2, 3 den Mittelabschnitt 5 flächig berühren, d.h. geometrisch eine Linienberührung stattfindet, so dass keine punktuelle Ueberbelastung bei den entsprechenden Berührungsstellen am Schlauch auftreten kann. Diese Berührung darf flächig genannt werden, weil der Profilstreifen aus Metall besteht und somit bei den Berührungsstelle eine kleine elastischer Verformung auftritt.

## Patentansprüche

1. Biegbarer Metallschlauch, der aus mindestens einem wendelförmig gewickelten Profilstreifen (1) gebildet ist, gekennzeichnet durch einen Abstandhalter (4), der dazu dient, den kleinsten Krümmungshalbmesser des Metallschlauches in seinem gebogenen Zustand festzulegen.

2. Metallschlauch nach Anspruch 1, bei dem der Profilstreifen (1) zur formschlüssigen Verbindung entlang seiner Längsränder derart abgebogen ausgebildet ist, dass zusammenwirkende Koppelabschnitte (2, 3) gebildet sind, dadurch gekennzeichnet, dass der Abstandhalter (4) zwischen jeweils zwei zusammenwirkenden Koppelabschnitten (2,3) angeordnet ist, um diese im ausgebogenen Zustand des Metallschlauches um eine vorgegebene Strecke voneinander entfernt zu halten.

3. Metallschlauch nach Anspruch 1 oder 2, dadurch gekennzeichnet, dass der Abstandhalter (4) ein wendelförmig gewickelter Draht ist, der zwischen den zusammenwirkenden Koppelabschnitten (2, 3) angeordnet ist.

4. Metallschlauch nach einem der vorangehenden Ansprüche, dadurch gekennzeichnet, dass der Profilstreifen (1) mindestens annähernd S-förmig ausgebildet ist und die Koppelabschnitte (2, 3) relativ zueinander in entgegengesetzten Richtungen abgebogen ausgebildet sind, und dass der Profilstreifen (1) einen Mittelabschnitt (5) aufweist, der schiefwinklig schräggestellt zu den Koppelabschnitten (2, 3) verläuft.

5. Metallschlauch nach Anspruch 4, dadurch gekennzeichnet, dass der Durchmesser des Drahtes (4) und die Schrägstellung des Mittelabschnittes (5) derart gewählt sind, dass beim zum kleinstmöglichen Krümmungshalbmesser gebogenen Zustand des Schlauches die Koppelabschnitte (2, 3) bei der vom Krümmungsmittelpunkt den grössten Abstand aufweisenden Stelle beidseits am Draht (4), und bei der vom Krümmungsmittelpunkt den kleinsten Abstand aufweisenden Stelle mindestens in Linienberührung am Mittelabschnitt (5) anliegen.
